# EUROPEAN PATENT SPECIFICATION

(11) **EP 1 201 274 B1**
(45) Date of publication and mention of the grant of the patent: **27.04.2005**
(21) Application number: 01402746.0
(22) Date of filing: 23.10.2001
(51) Int. Cl.: A63F 13/02

(54) **Modular laptop control console for playing video games**
Modulare Schossbedienungskonsole für Videospiele
Console de commande modulaire pour jouer à des jeux vidéos et à poser sur les genoux

(30) Priority: 31.10.2000 US 702350
(43) Date of publication of application: 02.05.2002
(73) Proprietor: Midway Amusement Games, LLC, Chicago, Illinois 60618 (US)
(72) Inventor: Gomez, George A., Evanston, Illinois 60202 (US)
(74) Representative: Loisel, Bertrand

(56) References cited:
- US-A- 4 422 640
- US-A- 4 494 754
- US-A- 4 630 823
- US-A- 5 645 277

## Description

### FIELD OF THE INVENTION

The invention relates generally to video games and, more particular, to a modular laptop control console for playing video games especially adapted for use in the home.

### BACKGROUND OF THE INVENTION

A typical video game system includes a video game central processing unit (CPU), at least one video game controller, and game software. The game software is typically stored in a cartridge or disc that is inserted into the CPU. The CPU contains conventional hardware and software for executing the game software. To permit a user to play a game included in the game software, the video game controller is typically connected to the CPU by a cable containing electrical wires.

Some video games require the use of multiple game controllers at the same time. Such controllers may, for example, include a joystick, a limited number of buttons, a full keyboard, a trackball, and a light gun. To facilitate the use of multiple controllers at the same time, the controllers may be mounted to a common laptop tray or frame of the type proposed in U.S. Patent No. 4,648,603. Each controller is individually connected to the CPU by a respective cable. Because each controller has its own cable, multiple cables must be connected to the CPU. This can be a time-consuming and cumbersome task, especially if the cables become entangled and identification of which cable belongs to which controller becomes difficult. Also, if the cables are entangled, twisted, or inadvertently yanked or stepped upon, the integrity of the electrical signals transmitted through one or more of the cables can be compromised.

Accordingly, there is a need for a laptop control console that overcomes the aforementioned shortcomings of existing laptop products and, additionally, allows the game controllers to be easily installed in the laptop control console and allows the number, type, and arrangement of controllers in the laptop control console to be customized according to the requirements of a player or a video game.

### SUMMARY OF THE INVENTION

In accordance with the present invention, a modular laptop control console includes a housing, an internal distributed electrical transmission system, and an external cable. The housing includes a mounting panel having a plurality of fixed mounting locations. Each mounting location is adapted to receive any one of a plurality of different video game controllers, preferably by snapping the controller in place at the respective mounting location. The distributed electrical transmission system is located within the housing and is electrically connected to the external cable extending from the housing. The game controllers mounted to the respective fixed mounting locations are electrically connected to the external cable via the distributed electrical transmission system. The external cable is adapted to plug into a video game CPU.

In a preferred embodiment, the housing is "I" shaped and includes the horizontal upper mounting panel, a horizontal bottom panel, and a central vertical portion extending between the mounting panel and the bottom panel. While the player is in a sitting position on a chair, couch, or the like, the bottom panel lies beneath the player's legs, the central portion extends upwardly between the player's legs, and the mounting panel rests on top of the player's legs.

### BRIEF DESCRIPTION OF THE DRAWINGS

The foregoing and other advantages of the invention will become apparent upon reading the following detailed description and upon reference to the drawings in which:
FIG. 1 is a perspective view of a modular laptop control console embodying the present invention, prior to mounting a plurality of game controllers thereto;
FIG. 2 is a perspective view of the laptop control console after mounting the game controllers thereto;
FIG. 3 is an enlarged perspective view of a game controller being installed in one of the mounting locations of the laptop control console; and
FIG. 4 is a perspective view of a video game system employing the laptop control console.

While the invention is susceptible to various modifications and alternative forms, specific embodiments have been shown by way of example in the drawings and will be described in detail herein. However, it should be understood that the invention is not intended to be limited to the particular forms disclosed. Rather, the invention is to cover all modifications, equivalents, and alternatives falling within the spirit and scope of the invention as defined by the appended claims.

### DESCRIPTION OF SPECIFIC EMBODIMENTS

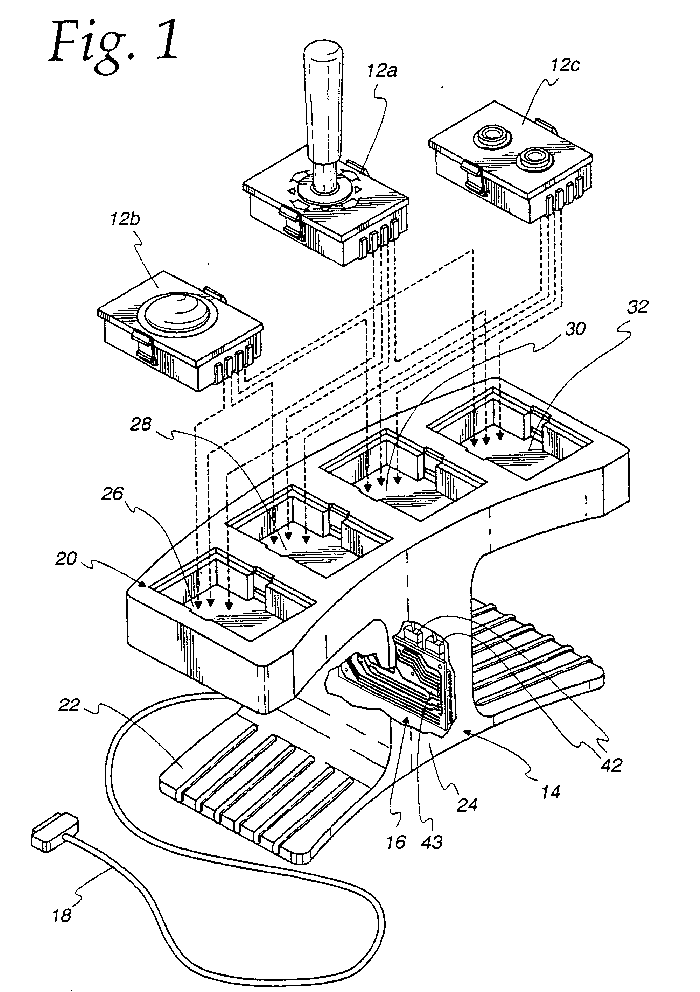

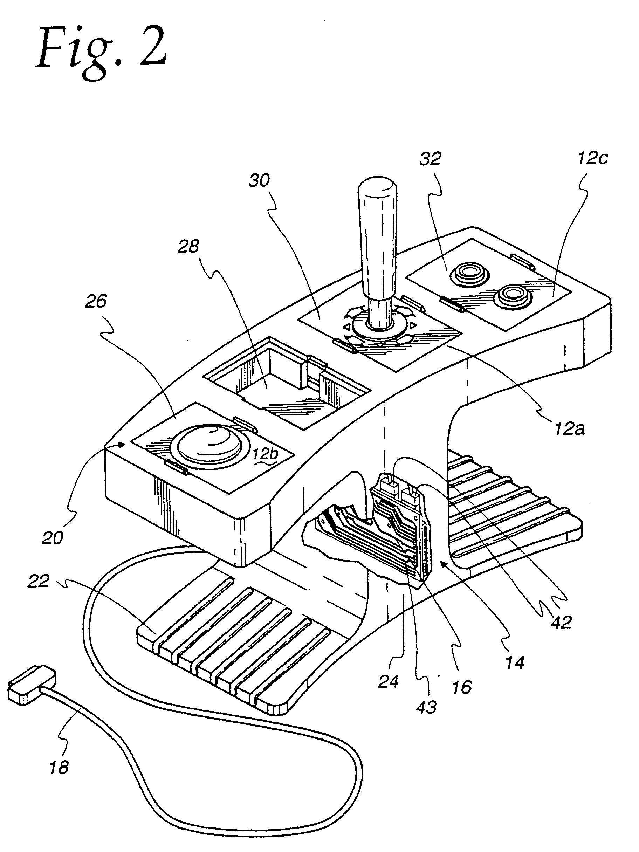

Turning now to the drawings, FIGS. 1 and 2 depict a modular laptop control console 10 embodying the present invention. FIG. 1 depicts the console 10 prior to mounting a plurality of game controllers 12a, 12b, and 12c thereto, while FIG. 2 depicts the console 10 after mounting the game controllers 12a, 12b, and 12c thereto.

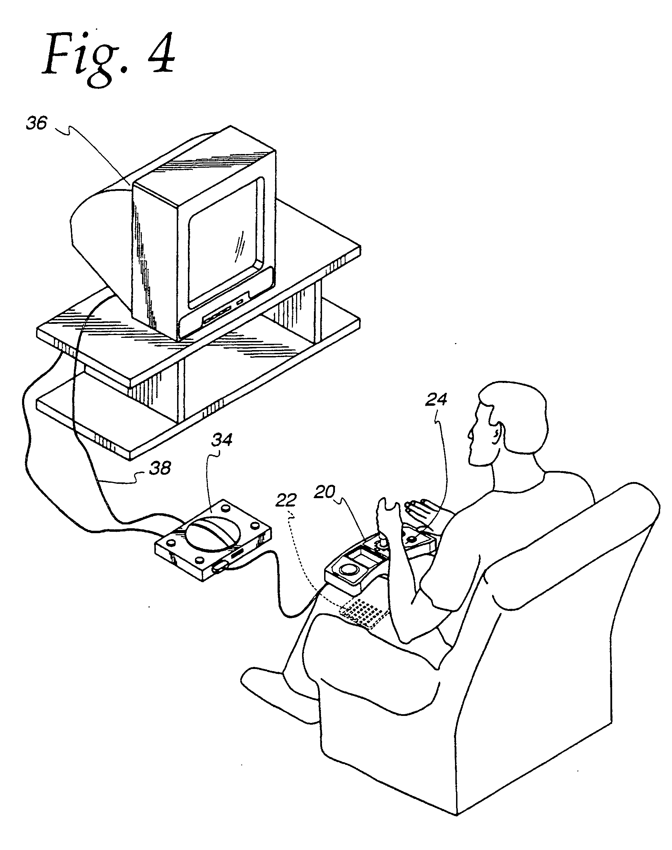

The laptop control console 10 includes a housing 14, an internal distributed electrical transmission system 16, and an external cable 18. The housing 14 is preferably "I" shaped and includes a horizontal upper mounting panel 20, a horizontal bottom panel 22, and a central vertical portion 24 extending between the mounting panel and the bottom panel. While the player is in a sitting position on a chair, couch, or the like, as shown in FIG. 4, the bottom panel 22 lies beneath the player's legs, the central portion 24 extends upwardly between the player's legs, and the mounting panel 20 rests on top of the player's legs.

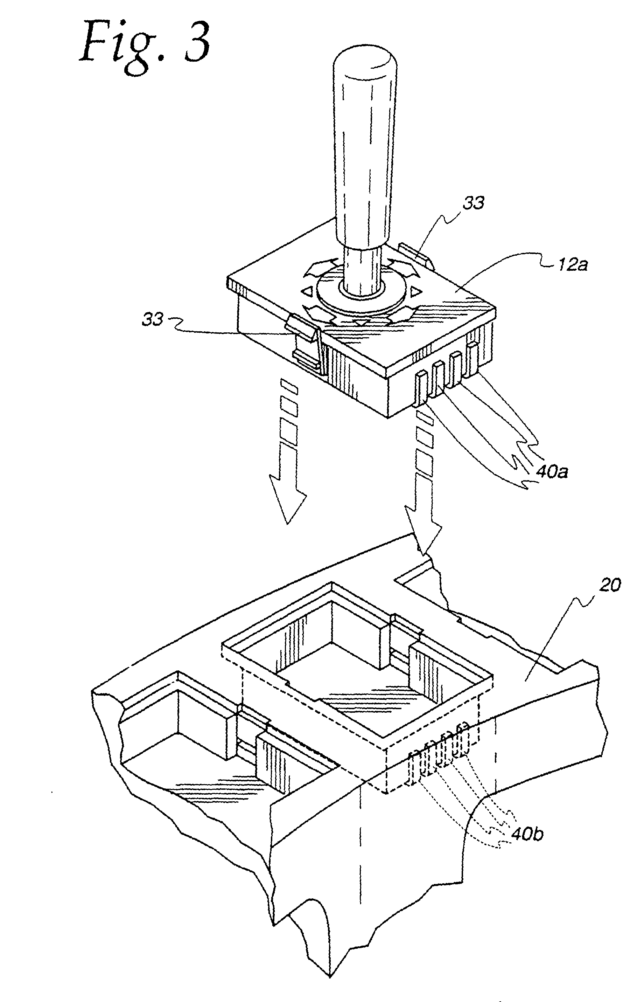

Referring back to FIGS. 1 and 2, the mounting panel 20 includes a plurality of fixed mounting locations 26, 28, 30, and 32. Each mounting location is adapted to interchangeably receive any one of a plurality of different video game controllers such that the number, type, and arrangement of game controllers in the laptop control console can be customized according to the requirements of a player (e.g., right-handed versus left-handed) or a video game. For example, as shown by the dotted lines in FIG. 1, each of the game controllers 12a, 12b, and 12c could be installed in any of the locations 26, 28, 30, and 32 so long as the selected installation location is not already occupied by another controller. As best shown in FIG. 3, each game controller may include a pair of spring-loaded snaps 33 for easily snapping the game controller in place in its mounting location.

The distributed electrical transmission system 16 is located within the housing 14 and is electrically connected to the external cable 18 extending from the housing 14. As shown in FIG. 4, the external cable 18 terminates in an electrical connector adapted to plug into a video game CPU 34. The CPU 34 accommodates a video game memory, such as a removable cartridge, disc, or the like, and executes the game software stored in the game memory. The CPU 34 is preferably of the type for home use such as the Nintendo 64, Sony PlayStation, and Sega Dreamcast systems. Video game CPUs such as these are electrically connected to a video monitor 36 such as a standard home television by a cable 38 and are powered by a typical 110 volt AC wall outlet. The CPU 34 executes the game software stored in the game memory and depicts game play elements associated with the executed software on the video monitor 36. The game play elements may, for example, include characters, vehicles, implements, background, special effects, etc. The CPU 34 manipulates these game play elements in response to user commands entered at the game controllers 12a, 12b, and 12c and transmitted from the game controllers to the CPU 34 via the laptop control console 10 and the external cable 18.

Referring back to FIGS. 1 and 2, the game controllers 12a, 12b, and 12c generate a variety of electrical command signals in response to being manipulated by a player. These command signals vary depending upon the type of game controller used to generate the signals. Examples of different types of game controllers include a joystick, a limited number of buttons, a full keyboard, a trackball, and a light gun. In the illustrated embodiment, the game controller 12a is a joystick that provides directional information, and the game controllers 12b and 12c each include one or more buttons that provide on/off information.

The electrical command signals generated by the game controllers 12a, 12b, and 12c are transmitted to the CPU 34 via the electrical transmission system 16 and the external cable 18. To accomplish this, each game controller is electrically connected the electrical transmission system 16 by a pair of mating fixed or floating electrical connectors 40a and 40b (see FIG. 3). The connector 40a comes with the associated game controller, while the connector 40b comes with a selected mounting location where the game controller is installed. Each mounting location on the mounting panel 20 has its own connector 40b. If either of the pair of mating connectors 40a and 40b is of the floating (loose) type, the connectors must of course be manually engaged prior to snapping the game controller in place at the selected mounting location. If, however, both of the pair of mating connectors 40a and 40b are of the fixed type, the connectors are automatically engaged as the game controller in snapped in place at the selected mounting location. In FIG. 3, for example, the connectors 40a and 40b are essentially sets of exposed electrical contacts composed of copper or the like. The contacts 40a protrude from the molded plastic housing of the game controller, while the contacts 40b are molded into the cavity at the mounting location.

The connectors 40b for the different mounting locations on the mounting panel 20 lead into corresponding internal cables 42 and a printed circuit board 43 (see FIG. 1) of the electrical transmission system 16. The cables 42 are located inside the housing 14 and are coupled via the printed circuit board 43 to the single external cable 18. An advantageous feature of the laptop control console 10 is that it employs only a single external cable (i.e., the cable 18), as opposed to multiple external cables. This external cable 18 is easily identified and connected to the CPU 34 (see FIG. 3) and is less likely to become entangled, twisted, or inadvertently yanked or stepped upon than if there were separate external cables for the different game controllers.

The laptop control console 10 is primarily intended for use by a player at home for playing home video games. Because the controllers and their arrangement in the console 10 can be made similar to the controllers in a corresponding arcade game, the console 10 enhances the player's experience of playing at home. In prior art systems, the arcade controllers are typically at the higher end in terms of quality, while the home controllers for the corresponding home game are often a poor substitute. The console 10 and its controllers can make the home game experience more like that of the corresponding arcade game.

In addition, the laptop control console 10 provides a more physically secure and robust platform for the player than conventional controller mounts. The action of playing can impart large forces on the controllers which need to be mounted securely in order to provide the player with a solid feeling and encourage active handling of the controllers.

While the present invention has been described with reference to one or more particular embodiments, those skilled in the art will recognize that many changes may be made thereto without departing from the spirit and scope of the present invention. Each of these embodiments and obvious variations thereof is contemplated as falling within the scope of the claimed invention, which is set forth in the following claims.

## Claims

1. A laptop control console for playing video games comprising:
a housing including a mounting panel having a plurality of fixed mounting locations, each mounting location being adapted to interchangeably receive any one of a plurality of different video game controllers;
an external cable extending from the housing and adapted to plug into a video game central processing unit; and
an internal distributed electrical transmission system located within the housing and electrically connected to the external cable, the electrical transmission system transmitting command signals from the game controllers to the external cable.

2. The laptop control console of claim 1, wherein the fixed mounting locations are adapted to allow the game controllers to be snapped in place at the respective mounting locations.

3. The laptop control console of claim 1, wherein the housing is "I" shaped and includes the mounting panel, a generally horizontal bottom panel, and a central vertical portion extending between the mounting panel and the bottom panel, the mounting panel being generally horizontal.

4. The laptop control console of claim 3, wherein the housing is dimensioned such that while a player is in a sitting position, the bottom panel lies beneath the player's legs, the central portion extends upwardly between the player's legs, and the mounting panel rests on top of the player's legs.

5. The laptop control console of claim 1, wherein the electrical transmission system includes a plurality of electrical cables and a printed circuit board.

6. The laptop control console of claim 1, wherein each mounting location includes a respective cavity for receiving the any one of the plurality of different video game controllers.

7. The laptop control console of claim 6, wherein the cavity at each mounting location includes a plurality of electrical contacts adapted to engage corresponding electrical contacts on the any one of the plurality of different video game controllers.

8. A modular laptop control kit for playing video games, comprising:
a laptop control console including a housing, an external cable, and an internal distributed electrical transmission system, the housing including a mounting panel having a plurality of fixed mounting locations, the external cable extending from the housing and adapted to plug into a video game central processing unit, the electrical transmission system located within the housing and electrically connected to the external cable; and
a plurality of different video game controllers capable of being installed on the mounting panel in different configurations, each mounting location being adapted to interchangeably receive any one of the game controllers, the installed game controllers being adapted to generate command signals that are transmitted to the external cable via the electrical transmission system.

9. The laptop control kit of claim 8, wherein the fixed mounting locations are adapted to allow the game controllers to be snapped in place at the respective mounting locations.

10. The laptop control kit of claim 8, wherein the housing is "I" shaped and includes the mounting panel, a generally horizontal bottom panel, and a central vertical portion extending between the mounting panel and the bottom panel, the mounting panel being generally horizontal.

11. The laptop control kit of claim 10, wherein the housing is dimensioned such that while a player is in a sitting position, the bottom panel lies beneath the player's legs, the central portion extends upwardly between the player's legs, and the mounting panel rests on top of the player's legs.

12. The laptop control kit of claim 8, wherein each mounting location includes a respective cavity for receiving the any one of the game controllers.

13. The laptop control kit of claim 12, wherein the cavity at each mounting location includes a plurality of electrical contacts adapted to engage corresponding electrical contacts on the any one of the game controllers.

14. The laptop control kit of claim 8, wherein each game controller includes a housing adapted to fit within the cavity of the mounting location where the game controller is installed.

## Patentansprüche

1. Tragbare Bedienkonsole zum Spielen von Videospielen, mit
einem Gehäuse mit einer Montageplatte mit mehreren festen Montagestellen, wobei jede Montagestelle ausgebildet ist, um irgendeine von mehreren verschiedenen Videospielsteuerungen austauschbar aufzunehmen;
einem externen Kabel, das sich von dem Gehäuse erstreckt und ausgebildet ist, um in eine Videospiel-Zentraleinheit gesteckt zu werden; und
einem innen verteilten elektrischen Übertragungssystem, das in dem Gehäuse angeordnet und mit dem externen Kabel elektrisch verbunden ist, wobei das elektrische Übertragungssystem Befehlssignale von den Spielsteuerungen zu dem externen Kabel überträgt.

2. Tragbare Bedienkonsole nach Anspruch 1, bei welcher die festen Montagestellen ausgebildet sind, um die Spielsteuerungen an den jeweiligen Montagestellen einschnappen zu lassen.

3. Tragbare Bedienkonsole nach Anspruch 1, bei welcher das Gehäuse I-förmig ist und die Montageplatte, eine allgemein waagrechte Bodenplatte und einen mittigen senkrechten Abschnitt, der zwischen der Montageplatte und der Bodenplatte verläuft, enthält, wobei die Montageplatte allgemein waagrecht ist.

4. Tragbare Bedienkonsole nach Anspruch 3, bei welcher das Gehäuse so dimensioniert ist, dass die Bodenplatte, wenn ein Spieler sitzt, unter den Beinen des Spielers liegt, wobei der mittige Abschnitt zwischen den Beinen des Spielers nach oben verläuft und die Montageplatte auf der Oberseite der Beine des Spielers ruht.

5. Tragbare Bedienkonsole nach Anspruch 1, bei welcher das elektrische Übertragungssystem mehrere elektrische Kabel und eine Leiterplatte enthält.

6. Tragbare Bedienkonsole nach Anspruch 1, bei welcher jede Montagestelle eine jeweilige Ausnehmung zum Aufnehmen irgendeiner der mehreren unterschiedlichen Videospielsteuerungen enthält.

7. Tragbare Bedienkonsole nach Anspruch 6, bei welcher die Ausnehmung an jeder Montagestelle mehrere elektrische Kontakte zum Eingriff mit entsprechenden elektrischen Kontakten an der einen der mehreren unterschiedlichen Videospielsteuerungen enthält.

8. Modularer, tragbarer Steuerbausatz zum Spielen von Videospielen, mit einer tragbaren Bedienkonsole mit einem Gehäuse, einem externen Kabel und einem innen verteilten elektrischen Übertragungssystem, wobei das Gehäuse eine Montageplatte mit mehreren festen Montagestellen enthält, das externe Kabel von dem Gehäuse verläuft und zum Einstecken in eine Videospiel-Zentraleinheit ausgebildet ist, und das elektrische Übertragungssystem in dem Gehäuse angeordnet und mit dem externen Kabel elektrisch verbunden ist; und mehreren unterschiedlichen Videospielsteuerungen, die an der Montageplatte in verschiedenen Konfigurationen installiert werden können, wobei jede Montagestelle ausgebildet ist, um irgendeine der Spielsteuerungen austauschbar aufzunehmen, und die installierten Spielsteuerungen ausgebildet sind, um Befehlssignale zu erzeugen, die über das elektrische Übertragungssystem zu dem externen Kabel übertragen werden.

9. Tragbarer Steuerbausatz nach Anspruch 8, bei welchem die festen Montagestellen ausgebildet sind, um die Spielsteuerungen an den jeweiligen Montagestellen einschnappen zu lassen.

10. Tragbarer Steuerbausatz nach Anspruch 8, bei welchem das Gehäuse I-förmig ist und die Montageplatte, eine allgemein waagrechte Bodenplatte und einen mittigen senkrechten Abschnitt, der zwischen der Montageplatte und der Bodenplatte verläuft, enthält, wobei die Montageplatte allgemein waagrecht ist.

11. Tragbarer Steuerbausatz nach Anspruch 10, bei welchem das Gehäuse so dimensioniert ist, dass die Bodenplatte, wenn ein Spieler sitzt, unter den Beinen des Spielers liegt, der mittige Abschnitt zwischen den Beinen des Spielers nach oben verläuft und die Montageplatte auf der Oberseite der Beine des Spielers ruht.

12. Tragbarer Steuerbausatz nach Anspruch 8, bei welchem jede Montagestelle eine jeweilige Ausnehmung zum Aufnehmen der einen der Spielsteuerungen enthält.

13. Tragbarer Steuerbausatz nach Anspruch 12, bei welchem die Ausnehmung an jeder Montagestelle mehrere elektrische Kontakte enthält, die zum Eingriff mit entsprechenden elektrischen Kontakten der einen der Spielsteuerungen ausgebildet sind.

14. Tragbarer Steuerbausatz nach Anspruch 8, bei welchem jede Spielsteuerung ein Gehäuse enthält, das zum Einpassen in die Ausnehmung der Montagestelle, an welcher die Spielsteuerung installiert wird, ausgebildet ist.

## Revendications

1. Une console de commande portative, pour jouer à des jeux vidéo, comprenant :
un boîtier incluant un panneau de montage ayant une multiplicité de positions de montage fixes, chaque position de montage étant adaptée pour recevoir de manière interchangeable l'une quelconque d'une multiplicité d'unités de commande de jeu vidéo différentes,
un câble externe s'étendant à partir du boîtier et adapté pour être enfiché dans une unité centrale de traitement de jeu; et
un système de transmission électrique réparti interne, placé à l'intérieur du boîtier et connecté électriquement au câble externe, le système de transmission électrique transmettant des signaux d'ordre à partir des unités de commande de jeu vers le câble externe.

2. La console de commande portative selon la revendication 1, dans laquelle les positions de montage fixes sont adaptées pour permettre aux unités de commande de jeu d'être encliquetées en place aux positions de montage respectives.

3. La console de commande portative selon la revendication 1, dans laquelle le boîtier a une forme en "I" et comprend le panneau de montage, un panneau inférieur de forme générale horizontale, et une partie verticale centrale s'étendant entre le panneau de montage et le panneau inférieur, le panneau de montage étant de façon générale horizontal.

4. La console de commande portative selon la revendication 3, dans laquelle le boîtier est dimensionné de façon que pendant qu'un joueur est dans une position assise, le panneau inférieur s'étende au-dessous des jambes du joueur, la partie centrale s'étende vers le haut entre les jambes du joueur et le panneau de montage repose sur la partie supérieure des jambes du joueur.

5. La console de commande portative selon la revendication 1, dans laquelle le système de transmission électrique comprend une multiplicité de câbles électriques et une carte de circuit imprimé.

6. La console de commande portative selon la revendication 1, dans laquelle chaque position de montage comprend une cavité respective pour recevoir l'une quelconque de la multiplicité d'unités de commande de jeu vidéo différentes.

7. La console de commande portative selon la revendication 6, dans laquelle la cavité à chaque position de montage comprend une multiplicité de contacts électriques adaptés pour venir en contact avec des contacts électriques correspondants sur l'une quelconque de la multiplicité d'unités de commande de jeu vidéo différentes.

8. Un ensemble de commande modulaire portative pour jouer à des jeux vidéo, comprenant :
une console de commande portative incluant un boîtier, un câble externe et un système de transmission électrique réparti interne, le boîtier incluant un panneau de montage ayant une multiplicité de positions de montage fixes, le câble externe s'étendant à partir du boîtier et étant adapté pour être enfiché dans une unité centrale de traitement de jeu vidéo, le système de transmission électrique étant placé à l'intérieur du boîtier et connecté électriquement au câble externe; et
une multiplicité d'unités de commande de jeu vidéo différentes pouvant être installées sur le panneau de montage en différentes configurations, chaque position de montage étant adaptée pour recevoir de façon interchangeable l'une quelconque des unités de commande de jeu, les unités de commande de jeu installées étant adaptées pour générer des signaux d'ordre qui sont transmis au câble externe par l'intermédiaire du système de transmission électrique.

9. L'ensemble de commande portative selon la revendication 8, dans lequel les positions de montage fixes sont adaptées pour permettre aux unités de commande de jeu d'être encliquetées en place aux positions de montage respectives.

10. L'ensemble de commande portative selon la revendication 8, dans lequel le boîtier a une forme en "I" et comprend le panneau de montage, un panneau inférieur qui est de façon générale horizontal, et une partie verticale centrale s'étendant entre le panneau de montage et le panneau inférieur, le panneau de montage étant de façon générale horizontal.

11. L'ensemble de commande portative selon la revendication 10, dans lequel le boîtier est dimensionné de façon que pendant qu'un joueur est dans une position assise, le panneau inférieur s'étende au-dessous des jambes du joueur, la partie centrale s'étende vers le haut entre les jambes du joueur et le panneau de montage repose sur la partie supérieure des jambes du joueur.

12. L'ensemble de commande portative selon la revendication 8, dans lequel chaque position de montage comprend une cavité respective pour recevoir l'une quelconque des unités de commande de jeu.

13. L'ensemble de commande portative selon la revendication 12, dans lequel la cavité à chaque position de montage comprend une multiplicité de contacts électriques adaptés pour venir en contact avec des contacts électriques correspondants sur l'une quelconque des unités de commande de jeu.

14. L'ensemble de commande portative selon la revendication 8, dans lequel chaque unité de commande de jeu comprend un boîtier adapté pour s'ajuster à l'intérieur de la cavité de la position de montage dans laquelle l'unité de commande de jeu est installée.
